# EUROPÄISCHE PATENTANMELDUNG

(11) **EP 2 261 104 A1**
(43) Veröffentlichungstag der Anmeldung: **15.12.2010**
(21) Anmeldenummer: 09162418.9
(22) Anmeldetag: 10.06.2009
(51) Int. Cl.: B62D 29/00

(54) **Element zur Abdichtung oder Verstärkung eines Hohlraumes und Verfahren zur Einbringung eines solchen Elements in den Hohlraum eines Bauelementes**

(71) Anmelder: Sika Technology AG, 6340 Baar (CH)
(72) Erfinder: Bailly, Sahar, 1480 Saints (BE); Eutebach, Thomas, 8906 Bonstetten (CH); Ulmann, Stefan, 8570 Weinfelden (CH); Meiser, Marcel, 8182 Hochfelden (CH); Mendibour, Jean, 68510 Sierentz (FR); Belpaire, Vincent, 1180 Uccle (BE); Nessau, Maik, 8055 Zürich (CH)
(74) Vertreter: Sika Patent Attorneys

(57) **Zusammenfassung**

Bei einem Element (20) zur Abdichtung oder Verstärkung eines Hohlraumes eines Bauelementes, insbesondere eines Fahrzeuges, umfasst das Element ein schäumbares Teil (2).

Das Element (20) weist ein Federelement (10) auf, welches zur Spannung des Elements (20) im Hohlraum dient.

## Beschreibung

### Technisches Gebiet

Die Erfindung geht aus von einem Element zur Abdichtung oder Verstärkung eines Hohlraumes nach dem Oberbegriff des ersten Anspruches.

Die Erfindung geht ebenfalls aus von einem Verfahren zur Einbringung eines solchen Elements nach dem Oberbegriff des unabhängigen Verfahrensanspruches.

### Stand der Technik

Vielfach weisen Bauelemente, wie Karosserien und/oder Rahmen von Transport- und Fortbewegungsmitteln, insbesondere von Fahrzeugen zu Wasser oder zu Land oder von Luftfahrzeugen, Hohlräume auf, insbesondere um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das leichtes Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmäßige Form oder ein enges Ausmaß auf, wodurch es erschwert wird, sie richtig abzudichten, zu verstärken und zu dämpfen. Insbesondere im Automobilbau werden deshalb Abdichtungselemente (Englisch: Baffle) verwendet, um Hohlräume abzudichten und/ oder akustisch abzuschotten, oder Verstärkungselemente (Englisch: Reinforcer) verwendet, um Hohlräume zu verstärken.
ist es schwierig eine genügende Abdichtung zu gewährleisten.
Vielfach gibt es auch Probleme diese Elemente in den Hohlräumen genau und anhaltend zu positionieren.

### Darstellung der Erfindung

Der Erfindung liegt die Aufgabe zugrunde, bei einem Element zur Abdichtung oder Verstärkung eines Hohlraumes der eingangs genannten Art die Nachteile des Standes der Technik zu vermeiden und ein verbessertes Element zur Verfügung zu stellen.

Erfindungsgemäss wird dies durch die Merkmale des ersten Anspruches erreicht.

Kern der Erfindung ist es also, dass.

Die Vorteile der Erfindung sind unter anderem darin zu sehen, dass das Element ein Federelement aufweist, welches zur Spannung des Elements im Hohlraum dient. Durch diese Spannung auf das Element wird dieses im Hohlraum festgeklemmt und kann sich nicht mehr verschieben. Dadurch wird sicher gewährleistet, dass das Element in der gewünschten Position verbleibt, unabhängig von weiteren Behandlungschritten.

Weitere vorteilhafte Ausgestaltungen der Erfindung ergeben sich aus den Unteransprüchen.

### Kurze Beschreibung der Zeichnung

Im folgenden werden anhand der Zeichnungen Ausführungsbeispiele der Erfindung näher erläutert. Gleiche oder gleichwirkende Elemente sind in den verschiedenen Figuren mit den gleichen Bezugszeichen versehen. Bewegungsrichtungen sind mit Pfeilen angegeben.

Es zeigen:
- Fig. 1: schematische Querschnitte durch ein erfindungsgemässes Verstärkungselement vor und nach dem Einbau und nach dem Schäumen;
- Fig. 2: schematische Querschnitte durch ein weiteres erfindungsgemässes Verstärkungselement vor und nach dem Einbau und nach dem Schäumen;
- Fig. 3: schematische Querschnitte durch ein weiteres erfindungsgemässes Verstärkungselement vor und nach dem Einbau;
- Fig. 4: schematische Querschnitte durch ein weiteres erfindungsgemässes Verstärkungselement vor und nach dem Einbau;
- Fig. 5: schematischer Querschnitt durch ein weiteres erfindungsgemässes Verstärkungselement;
- Fig. 6: schematischer Querschnitt durch ein weiteres erfindungsgemässes Verstärkungselement;
- Fig. 7: schematische Draufsicht auf ein weiteres erfindungsgemässes Verstärkungselement;

- Fig. 8: schematische Draufsicht auf ein weiteres erfindungsgemässes Verstärkungselement.

Es sind nur die für das unmittelbare Verständnis der Erfindung wesentlichen Elemente gezeigt.

### Weg zur Ausführung der Erfindung

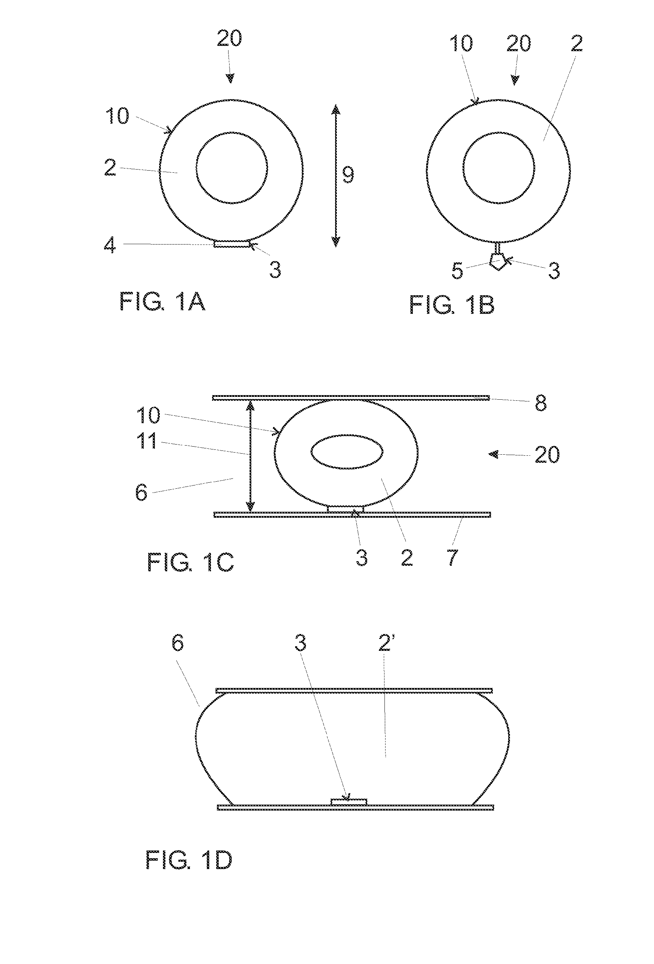

In den Fig. 1A bis 1D ist ein Element 20 dargestellt, welches als Abdichtungselement oder Verstärkungselement verwendet werden kann. In Fig. 1C und 1D ist schematisch dargestellt, dass dieses in einem Hohlraum 6, insbesondere in Karosserien und/oder Rahmen von Transport- und Fortbewegungsmitteln, insbesondere von Fahrzeugen zu Wasser oder zu Land oder von Luftfahrzeugen, angeordnet wird, besonders vorteilhaft zur Stützung eines Panels oder Bleches der Karosserie des Fahrzeuges, insbesondere des Kotflügels der Karosserie des Fahrzeuges. Es versteht sich jedoch von selbst, dass ein solches Element 20 in jeglichem Hohlraum 6 angeordnet werden kann.

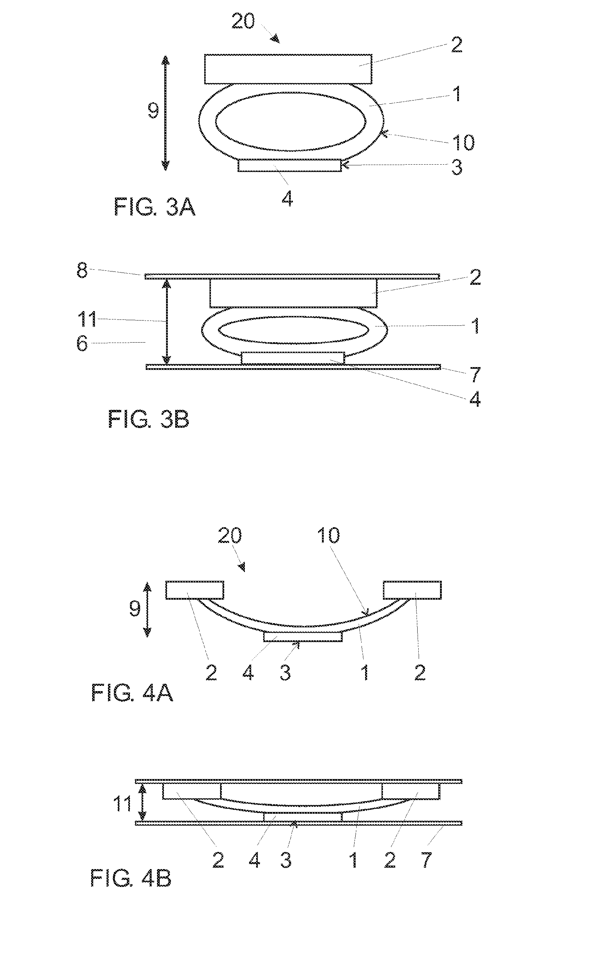

Das Element 20 umfasst ein schäumbares Element 2 aus einem schäumbaren Material. Solche schäumbaren Materialien werden weiter unten im Detail beschrieben. Das Element 20 umfasst weiter ein Federelement, welches in Figur 1 durch das schäumbare Element selber gebildet wird. Das schäumbare Element 2 ist dazu O-förmig, hohlzylinderförmig, ausgebildet. Nicht dargestellt ist, dass das schäumbare Element auch andere Formen haben kann, um eine Federwirkung zu erzielen, beispielsweise C-förmig, U-förmig, Z-förmig, in der Wirkung analog zu den Figuren 3 bis 6. Das schäumbare Material kann auch blockförmig ausgebildet sein, wenn es genügend reversible elastische Eigenschaften aufweist.

Das Element 20 kann weiterhin mindestens ein Befestigungselement 3 zur Befestigung und Platzierung des Verstärkungselements in einem Hohlraum umfassen. Die Befestigung kann mittels eines Klebstoffes 4 im Hohlraum befestigt werden. Dazu kann ein beliebiger Klebstoff wie Polyurethan-, Epoxid-, Acryl-, Hotmelt- usw. Klebstoff verwendet werden. Vorteilhaft werden Klebstoffe verwendet, welche eine klebrige Oberfläche aufweisen. Diese können schon vorher auf das Element 20 aufgebracht werden und mit einer abnehmbaren Schutzschicht versehen werden, die vor dem Aufkleben des Elementes 20 auf die Innenwand des Hohlraumes abgenommen wird, und dann das Element 20 einfach durch Andrücken auf die Innenwand des Holraumes befestigt wird. Der Klebstoff kann jedoch auch direkt vor Ort, wenn das Element 20 verarbeitet wird auf dieses aufgebracht werden und so das Element 20 mit der Innenwand des Hohlraumes verklebt werden. Für beide Vorgehensweisen werden vorteilhaft auch reaktive ein- oder zweikomponentige Klebstoffe verwendet, die bei höheren Temperaturen aushärten, wie z.B. Epoxidharzsysteme. Wichtig ist bei Anwendungen, bei welchen die Oberfläche des Bauteils, z.B. die Hohlraum-Innenwand, beispielsweise für eine Tauchlackierung erreichbar sein muss, der Klebstoff so ausgelegt ist, dass nachträglich, nach dem Einbrennen der Lackierung der Klebstoff nicht durch Feuchtigkeit unterwandert wird, und es somit in diesen Bereichen nicht zu Korrosion kommt.

Die Dicke des Klebstoffes wird so eingestellt, dass eine sichere Haftung erfolgt und dass z.B. gekrümmte Bereiche auf der Wand, auf der das Element 20 aufgebracht wird, ausgeglichen werden.

Die Befestigung des Verstärkungselements kann auch mechanisch z.B. mit einem Clip 5 erfolgen. Diese Befestigung mit einem Clip eignet sich insbesondere für Anwendungen, bei welchen die gesamte Oberfläche des Bauteils, also auch die Hohlraum-Innenwand, beispielsweise für eine Tauchlackierung erreichbar sein muss. Der Clip kann dabei aus dem gleichen Material wie das schäumbare Element bestehen oder aus einem anderen Material wie z.B. aus den weiter unten beschriebenen Trägermaterialien.

Die Befestigung kann auch kombiniert, d.h. mechanisch und mittels eines Klebstoffes erfolgen.

In Fig. 1C wird nun das Element 20 aus Fig. 1A in den Hohlraum 6 eingebracht. Dazu wird das Element 20 zuerst auf die Innenwand 7 des Hohlraumes 6 aufgebracht, hier aufgeklebt. Dann wird der Hohlraum 6 mittels einer Aussenwand 8 verschlossen, so dass das Element 20 zusammengedrückt wird. D.h. die Abmessung 9 im ungespannten Zustand des Elementes 20 ist grösser als die Abmessung 11 in gleicher Richtung im gespannten Zustand des Elementes 20, und somit dieser Abmessung des Hohlraumes 6. Da das Element 20 als Federelement 10 ausgebildet ist, kann es zusammengedrückt werden und das Federelement 10 gespannt werden. Durch das zusammendrücken des Elementes 20 übt dieses eine Gegenkraft aus, da es sich wieder auf den Durchmesser 9 ausdehnen will. Dadurch wird das Element 20 im Hohlraum 6 festgeklemmt und kann sich nicht mehr verschieben. Dadurch bleibt das Element 20 in seiner Position, auch beim Tauchlackierungsprozess und beim anschliessenden Einbrennprozess.

Gemäss Fig. 1D wird durch den Einbrennprozess das schäumbare Element 6 geschäumt und dehnt sich entsprechend den zugegebenen Schäumungsmitteln aus. Die mechanischen Eigenschaften sind durch die Zusammensetzung und den Schäumungsgrad des schäumbaren Materials vorgegeben und werden weiter unten im Detail beschrieben. Diese Eigenschaften werden entsprechend dem Verwendungszweck eingestellt, z.B. ob in diesem Bereich der Hohlraum verstärkt oder nur abgedichtet werden soll.

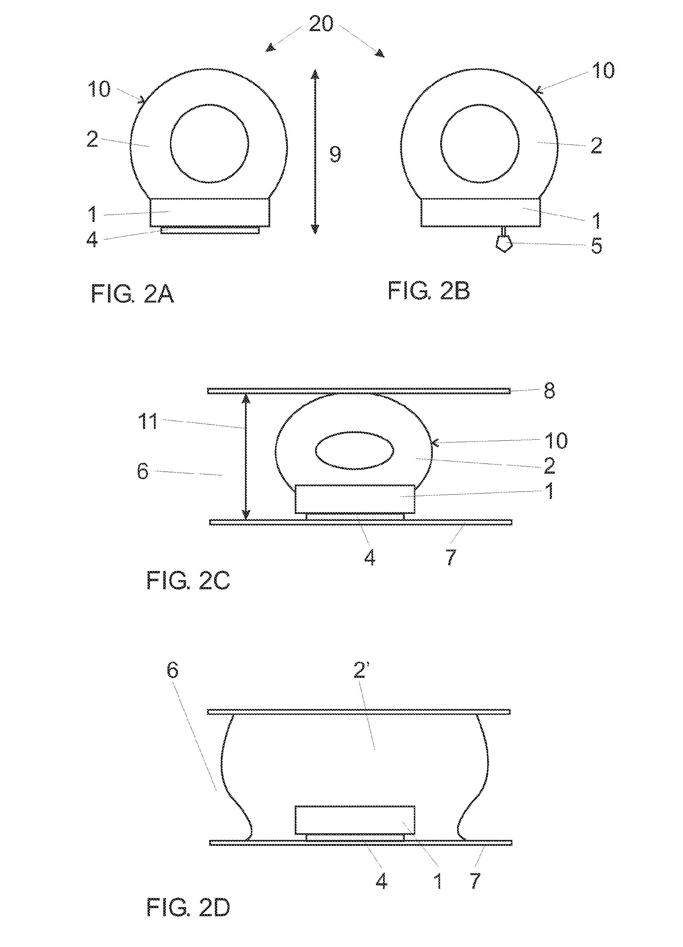

In den Figuren 2A bis 2D ist eine weitere Ausführungsform der Erfindung analog zu Figur 1 dargestellt. Das Element 20 umfasst hier zusätzlich ein Trägerelement 1, welches mit dem schäumbaren Element 2 verbunden ist. Das Trägerteil 1 kann aus beliebigen Materialien bestehen, welche weiter unten im Detail beschrieben sind. Zudem ist weiter unten die Herstellung des Elementes 20 im Detail beschrieben. Das schäumbare Teil kann dabei das Trägerteil ganz oder nur teilweise bedecken.

Das Trägerteil 1 kann dazu verwendet werden, um eine bessere Befestigung des Elementes 20 im Hohlraum zu erzielen oder um das Element 20 stabiler auszugestalten und auch die Richtung der Expansion beim Schäumen zu beeinflussen.

Wie in Figur 1 dargestellt ist auch hier in Figur 2 das schäumbare Element als Federelement ausgestaltet. Die Befestigung, Spannung, Schäumung des Elementes 20 erfolgt analog dem in Figur 1 beschriebenen.

In den Figuren 3A und 3B ist eine weitere Ausführungsform der Erfindung dargestellt. Das Element 20 umfasst hier ein Trägerelement 1 und ein schäumbares Element 2. Im Gegensatz zu Fig. 1 und 2 ist hier jedoch das Trägerelement als Federelement 10 ausgeformt. Das Trägerelement 1 ist dazu zylinderförmig, O-förmig, ausgestaltet und das schäumbare Element an der Aussenwand des Zylinders befestigt. Das Befestigungselement ist gegenüberliegend am Trägerelement angeordnet. Auch hier ist die Abmessung 9 im ungespannten Zustand grösser als die Abmessung 11 beim in den Hohlraum eingebauten Teil. Vorteil dieser Lösung ist, dass die Spannung auch beim Erweichen des schäumbaren Teiles nicht abgebaut wird, da sich das Trägermaterial nicht erweicht.

In den Figuren 4A und 4B ist eine weitere Ausführungsform der Erfindung dargestellt. Das Element 20 umfasst hier ein Trägerelement 1 und ein schäumbares Element 2 und das Trägerelement ist als Federelement 10 ausgeformt. Das Trägerelement 1 ist dazu halbzylinderförmig, U-förmig, ausgestaltet und zwei schäumbare Elemente an den zwei Enden des U-förmigen Trägerelementes befestigt. Das Befestigungselement ist gegenüberliegend am Trägerelement angeordnet. Auch hier ist die Abmessung 9 im ungespannten Zustand grösser als die Abmessung 11 beim in den Hohlraum eingebauten Teil. Vorteil dieser Lösung ist, dass die Spannung auch beim Erweichen des schäumbaren Teiles nicht abgebaut wird, da sich das Trägermaterial nicht erweicht. Zudem ist es hier vorteilhaft, dass die zwei schäumbaren Elemente unterschiedlich ausgeformt werden können.

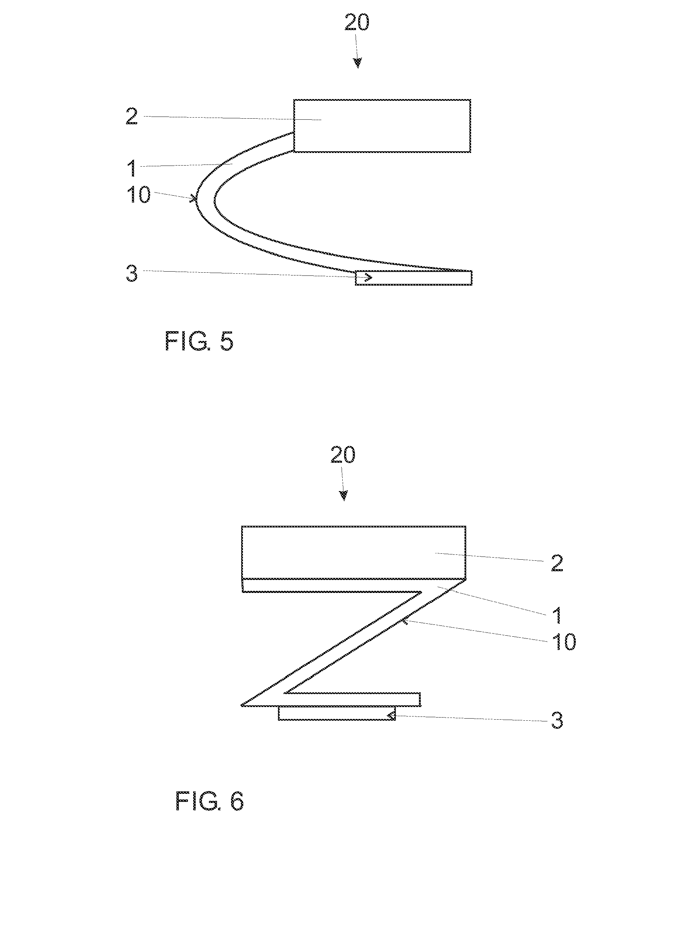

In den Figuren 5 und 6 sind zwei weitere Ausführungsform der Erfindung dargestellt. Das Element 20 umfasst hier ein Trägerelement 1 und ein schäumbares Element 2 und das Trägerelement ist als Federelement 10 ausgeformt. Das Trägerelement 1 ist dazu C-förmig, Fig. 5, und Z-förmig, Fig. 6, ausgestaltet. Sonst sind diese Elemente analog zu Fig. 3 und 4 ausgestaltet.

Selbstverständlich kann das Federelement 10, gebildet aus dem Trägerelement auch beliebig andere Formen haben, solange es eine Federfunktion gibt, durch die sich das Element im Hohlraum spannen und verklemmen lässt. Wie schon weiter oben erwähnt, kann das schäumbare Element 2, wenn es als Federelement wirkt analog zu Figuren 3 bis 6 ausgeführt werden, d.h. so ausgestaltet werden wie in diesen Figuren das Trägerelement. Ein Trägerelement ist dann optional und kann falls gewünscht analog Fig. 2 angeordnet werden.

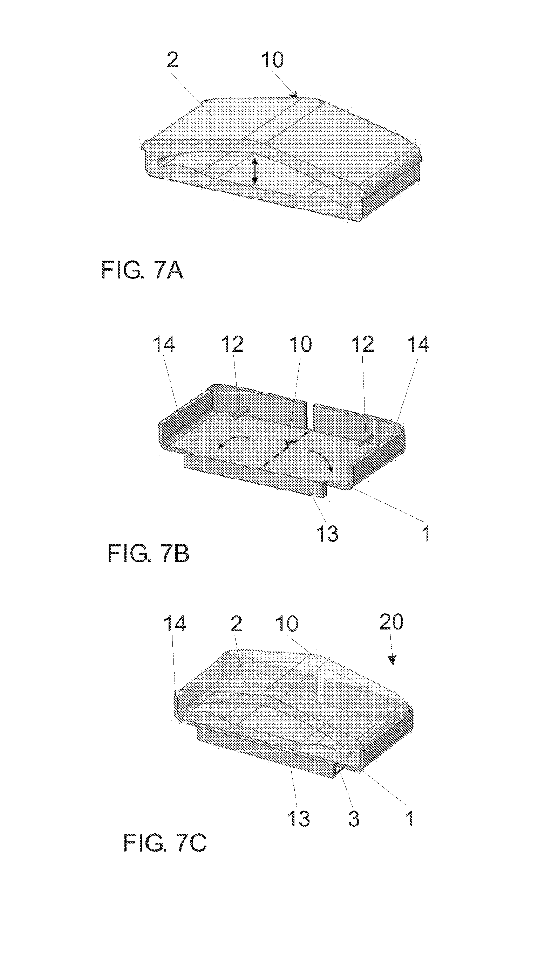

In den Figuren 7A bis 7C ist eine weitere Ausführungsform der Erfindung analog zu Figur 2 dargestellt. Wie in Figur 2 dargestellt ist auch hier in Figur 7 das schäumbare Element als Federelement ausgestaltet. Die Befestigung, Spannung, Schäumung des Elementes 20 erfolgt analog dem in Figur 2 beschriebenen.

Zusätzlich weist hier das Trägerteil 1 auch noch eine Federfunktion auf, wie dies durch die Pfeile angedeutet wird. Dadurch wird die Federfunktion nicht nur durch das schäumbare Teil, sondern auch durch das Trägerteil übernommen. Zur Befestigung des schäumbaren Teiles auf dem Trägerteil weist dieses Stifte 12 auf, die das schäumbare Teil zusätzlich halten. Das Trägerteil weist zudem einen Absatz 13 auf, mittels dessen das Element 20 im Hohlraum positioniert werden kann, beispielsweise indem der Absatz 13 als Anschlag für die Innenwand 7 verwendet wird. Das Trägerteil weist zudem Ränder 14 auf, die dazu dienen das schäumbare Teil aufzunehmen und dieses besser zu halten, insbesondere dann, wenn es sich bei höheren Temperaturen erweicht. Zudem dienen diese Ränder dazu, die Ausdehnung des schäumbaren Materials beim Schäumungsprozess zu beschränken, so dass die Expansion in gewisse Richtungen, die unerwünscht sind, eingeschränkt wird.

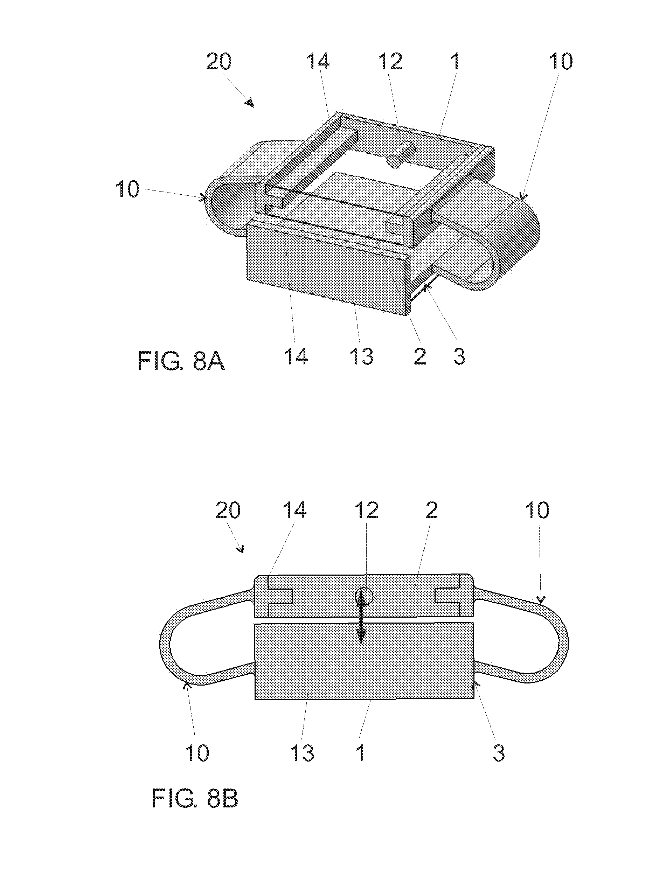

In den Figuren 8A und 8B ist eine weitere Ausführungsform der Erfindung analog zu den Figuren 3 bis 6 dargestellt. Wie in diesen Figuren dargestellt, ist auch hier in Figur 8 das Trägerelement als Federelement ausgestaltet. Die Befestigung, Spannung, Schäumung des Elementes 20 erfolgt analog dem in den Figuren 3 bis 6 beschriebenen. Das Federelement 10 wird hier durch zwei seitliche Schlaufen welche am Trägerelement angeordnet sind gebildet. Weiter sind am Trägerelement zusätzliche Elemente wie Stift 12, Absatz 13 und Rand 14 analog zu Figur 7 angeordnet. Nicht dargestellt ist, dass das schäumbare Element 2 auch mit einer Federfunktion analog zu Figur 7 ausgeformt werden könnte.

Besonders vorteilhaft ist es, wenn die vorgängig beschrieben erfinderischen Ausführungsformen dazu benützt werden, ein Panel oder Blech der Karosserie des Fahrzeuges zu stützen, insbesondere des Kotflügels der Karosserie des Fahrzeuges.

### Schäumbare Materialien:

Als schäumbares Material 2 kann grundsätzlich jedes beliebige Material eingesetzt werden, das kontrolliert zur Schäumung gebracht werden kann. Dieses Material kann dabei Verstärkungseigenschaften aufweisen oder auch nicht. Typischerweise wird das schäumbare Material thermisch, durch Feuchtigkeit oder durch elektromagnetische Strahlung geschäumt.

Ein solches schäumbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage Schaumstrukturen in Polymeren zu erzeugen.

Bevorzugt wird das schäumbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.

Geeignete Treibmittel sind beispielsweise auch kommerziell erhältlich unter dem Handelsnamen Expancel^{®} von der Firma Akzo Nobel, Niederlande, oder unter dem Handelsnamen Celogen^{®} von der Firma Chemtura Corp., USA.

Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 160 °C, insbesondere von 80 °C bis 150 °C, bevorzugt von 90 °C bis 140 °C, schäumbar.

Als schäumbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Neben Epoxid-Festharzen eignen sich auch kristalline Polyepoxide wie Triglycidylisocyanurate, Terephthalsäurediglycidylether, Gemische aus Terephthalsäurediglycidylether mit Trimellitsäuretriglycidylether , Hydrochinondiglycidylether sowie Addukte aus Trimethylolpropandiglycidylether mit Diisocyanaten wie 4,4'-, 2,4'- und 2,2'-Diphenylmethandüsocyanat (MDI), 2,4-und 2,6-Toluylendiisocyanat (TDI) oder 1-Isocyanato-3,3,5-trimethyl-5-isocyanatomethyl-cyclohexan (IPDI).

Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete schäumbare Materialien sind Treibmittel enthaltende einkomponentige Polyurethanzusammensetzungen aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschreiben sind in EP 0 204 970.

Weiterhin eignen sich als schäumbare Materialien Treibmittel enthaltende zweikomponentige Epoxid/Polyurethan-Zusammensetzungen, wie sie beispielsweise beschrieben sind in WO 2005/080524 A1, dessen Offenbarung hiermit eingeschlossen ist.

Ebenfalls geeignete schäumbare Materialien werden beispielsweise unter dem Handelsnamen SikaBaffle^{®} 240, SikaBaffle^{®} 250 oder SikaBaffle^{®} 255 von der Sika Corp., USA, vertrieben und sind in den Patenten US 5,266,133 und US 5,373,027 beschrieben, deren Offenbarung hiermit eingeschlossen ist.

Solche schäumbaren Materialien sind für die vorliegende Erfindung besonders bevorzugt.

Als schäumbare Materialien mit Verstärkungseigenschaften sind beispielsweise diejenigen bevorzugt, welche unter dem Handelsnamen SikaReinforcer^{®} 941 von der Sika Corp., USA, vertrieben werden. Diese sind beschrieben in US 6,387,470, dessen Offenbarung hiermit eingeschlossen ist.

### Trägermaterial

Das Trägerteil kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet.

Weiterhin kann das Trägerteil 1 einen beliebigen Aufbau und eine beliebige Struktur aufweisen. Es kann beispielsweise massiv, hohl, oder geschäumt sein oder eine gitterartige Struktur aufweisen. Die Oberfläche des Trägerteils kann typischerweise glatt, rau oder strukturiert sein.

Das Trägerteil 1 kann zusätzlich zur seiner Funktion als Träger für das schäumbare Material zur strukturellen Verstärkung oder zur Abdichtung des Bauteils oder auch zur Geräuschdämmung beitragen.

Bei erfindungsgemässen Abdichtungs- und Verstärkungselementen, bei welchen sich das schäumbare Material auf einem Trägerteil befindet, unterscheidet sich das Herstellungsverfahren dementsprechend, ob das Trägerteil aus einem durch Spritzguss verarbeitbaren Material besteht oder nicht. Ist dies der Fall, wird üblicherweise ein Zweikomponenten-Spritzgussverfahren eingesetzt. Dabei wird zuerst eine erste Komponente, in diesem Fall das Trägerteil, gespritzt. Nach Erstarren dieser ersten Komponente wird die Kavität im Werkzeug vergrössert, bzw. angepasst, oder der hergestellte Spritzling wird in ein neues Werkzeug gelegt, und eine zweite Komponente, in diesem Fall das schäumbare Material, wird mit einem zweiten Spritzaggregat an die erste Komponente angespritzt. Besteht das Trägerteil aus einem Material, welches sich nicht durch das Spritzgussverfahren herstellen lässt, also beispielsweise aus einem Metall, wird das Trägerteil in ein entsprechendes Werkzeug gelegt und das schäumbare Material wird an das Trägerteil angespritzt.

Selbstverständlich besteht auch die Möglichkeit das schäumbare Material durch beliebige andere Befestigungselement oder -verfahren an ein Trägerteil zu befestigen.

### Bezugszeichenliste

- 1: Trägerelement, -teil
- 2: schäumbares E!ement/Teil
- 2': Geschäumtes Element
- 3: Befestigungselement
- 4: Klebstoff
- 5: Mechanische Befestigung / Clip
- 6: Hohlraum
- 7: Innenwand
- 8: Aussenwand
- 9: Abmessung von 20 ungespannt
- 10: Federelement
- 11: Abmessung von 20 gespannt / Abmessung Hohlraum
- 12: Stift
- 13: Absatz
- 14: Rand
- 20: Element

## Patentansprüche

1. Element (20) zur Abdichtung oder Verstärkung eines Hohlraumes eines Bauelementes, insbesondere eines Fahrzeuges, wobei das Element ein schäumbares Element (2) umfasst,
**dadurch gekennzeichnet,**
**dass** das Element (20) ein Federelement (10) aufweist, welches zur Spannung des Elements (20) im Hohlraum dient.

2. Verstärkungssystem nach Anspruch 1,
**dadurch gekennzeichnet,**
**dass** das Element (20) ein Befestigungselement (3) zur Platzierung und zur Befestigung des Verstärkungselements in einem Hohlraum umfasst.

3. Verstärkungssystem nach Anspruch 2,
**dadurch gekennzeichnet,**
**dass** das Befestigungselement (3) ein Klebstoff (4) und / oder ein mechanisches Befestigungselement (5), insbesondere ein Clip ist.

4. Verstärkungssystem nach einem der vorhergehenden Ansprüche,
**dadurch gekennzeichnet,**
**dass** das Element (20) ein Trägerelement (1) umfasst.

5. Verstärkungssystem nach einem der vorhergehenden Ansprüche,
**dadurch gekennzeichnet,**
**dass** das Federelement (10) das schäumbare Element (2) und / oder das Trägerelement (1) ist.

6. Verstärkungssystem nach einem der vorhergehenden Ansprüche,
**dadurch gekennzeichnet,**
**dass** schäumbare Element und / oder das Trägerelement hohlzylinderförmig, kreisförmig, C-förmig, U-förmig oder Z-förmig ausgebildet ist.

7. Verstärkungssystem nach einem der vorhergehenden Ansprüche,
**dadurch gekennzeichnet,**
**dass** das schäumbare Material thermisch, bei einer Temperatur von
≤ 60 °C, insbesondere von 80 °C bis 150 °C, bevorzugt von 90 °C bis 140 °C, schäumbar ist.

8. Verstärkungssystem nach einem der Ansprüche 4 bis 7,
**dadurch gekennzeichnet,**
**dass** das Trägerelement aus einem Kunststoff, insbesondere Polyurethan oder Polyamid, oder aus einem Metall, insbesondere Aluminium oder Stahl oder aus einer Kombination von Kunststoff und Metall aufgebaut ist.

9. Verstärkungssystem nach einem der Ansprüche 4 bis 8,
**dadurch gekennzeichnet,**
**dass** das Trägerelement mindest einen Rand (14) umfasst, mittels dessen die Ausdehnung des schäumbaren Materials beim Schäumungsprozess beschränkbar ist.

10. Verwendung gemäss einem der Ansprüche 1 bis 9 zur Verstärkung in Hohlräumen von strukturellen Bauteilen in Karosserien und/oder Rahmen von Transport- und Fortbewegungsmitteln, insbesondere von Fahrzeugen zu Wasser oder zu Land oder von Luftfahrzeugen, bevorzugt von Automobilen, Lastkraftwagen, Eisenbahnwagen, Booten, Schiffen, Hubschraubern und Flugzeugen.

11. Verwendung gemäss einem der Ansprüche 1 bis 9 zur Verstärkung von Panel oder Blech der Karosserie von Fahrzeugen, insbesondere des Kotflügels der Karosserie von Fahrzeugen.

12. Verfahren zur Einbringung eines Elements (20) zur Abdichtung oder Verstärkung eines Hohlraumes (6) eines Bauelementes, insbesondere eines Fahrzeuges, wobei das Element ein schäumbares Element (2) umfasst,
**dadurch gekennzeichnet,**
**dass** das Element ein Federelement (10) aufweist und an einem Teil (7) des Hohlraumes (6) befestigt wird,
**dass** der Hohlraum (6) geschlossen wird, wodurch das Federelement zusammengedrückt und gespannt wird.

13. Verfahren nach Anspruch 12,
**dadurch gekennzeichnet,**
**dass** das Element (20) vor einem Tauchlackierungsprozess und einem anschliessenden Einbrennprozess in den Hohlraum (6) eingebracht wird.
